(19) Europäisches Patentamt
European Patent Office
Office européen des brevets

(11) **EP 3 404 591 A1**

(12) **EUROPÄISCHE PATENTANMELDUNG**

(43) Veröffentlichungstag:
**21.11.2018 Patentblatt 2018/47**

(51) Int Cl.:
**G06Q 10/06** (2012.01)  **G06Q 50/04** (2012.01)

(21) Anmeldenummer: **17171002.3**

(22) Anmeldetag: **15.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Meinardus, Martin**
**90480 Nürnberg (DE)**
• **Mielke, Jürgen**
**96049 Bamberg (DE)**

(54) **VERFAHREN UND VORRICHTUNG ZUR BESTIMMUNG ZUMINDEST EINES ZWECKMÄSSIGEN BETRIEBSZUSTANDES EINER INDUSTRIELLEN ANLAGE, COMPUTERPROGRAMMPRODUKT, ANTRIEBSSYSTEM UND INDUSTRIELLE ANLAGE**

(57)    Die Erfindung betrifft ein Verfahren und eine Vorrichtung zur Bereitstellung eines zweckmäßigen Betriebszustandes (KPI), ein Antriebssystem und ein Computerprogrammprodukt sowie eine industrielle Anlage (1). Ausgehend von Bewegungsparametern (BP) wie Drehzahl oder Drehmoment, Sensorwerten (SW) wie einer Temperatur oder einer Regelungseinstellung (RE) wird eine Vielzahl von (möglichen) Betriebszuständen (KPI) durch Funktionen (F) des jeweiligen Bewegungsparameters (BP), des jeweiligen Sensorwertes (SW) und/oder der jeweiligen Regelungseinstellung (RE) zusammengestellt. Mittels eines Benchmark-Verfahrens wird aus den Betriebszuständen (KPI) zumindest ein zweckmäßiger Betriebszustand (KPI) ausgewählt. Der zweckmäßige Betriebszustand (KPI) kann dem Bedienpersonal der industriellen Anlage (1) angezeigt werden. Durch die Erfindung wird die Auswahl des zweckmäßigen Betriebszustands (KPI) automatisiert. So kann das Bedienpersonal der industriellen Anlage (1) entlastet werden.

FIG 3

EP 3 404 591 A1

**Beschreibung**

Die Erfindung betrifft ein Verfahren und eine Vorrichtung zur Bestimmung zumindest einen zweckmäßigen Betriebszustandes einer industriellen Anlage. Weiter betrifft die Erfindung ein Computerprogrammprodukt, ein Antriebssystem und eine industrielle Anlage.

Die EP 2 78 817 A1 betrifft die Überwachung einer Ausrüstung einer Anlage mittels Benchmark. Hierbei werden von einer Sortiereinheit Zustandsdaten zu einer Rangliste verarbeitet.

Beim Betrieb einer industriellen Anlage werden vorzugsweise Betriebszustände (auch als Key Performance Indices) dargestellt. Die Auswahl zweckmäßiger Betriebszustände gestaltet sich bei großen und komplexen Anlagen schwierig, da nicht offensichtlich ist, welche Betriebszustände zweckmäßig den Zustand der industriellen Anlage wiedergibt.

Daher ist es Aufgabe der Erfindung, ein Verfahren und eine Vorrichtung bereitzustellen, um den Betrieb oder die Einrichtung einer Anlage zu erleichtern.

Diese Aufgabe wird mit einem Verfahren gemäß Anspruch 1 gelöst. Weiter wird diese Aufgabe durch eine Vorrichtung gemäß Anspruch 8 gelöst. Darüber hinaus wird diese Aufgabe durch ein Antriebssystem mit einer solchen Vorrichtung, ein Computerprogrammprodukt nach Anspruch 15 sowie durch eine industrielle Anlage mit einer solchen Vorrichtung gelöst.

Grundlage für die Bestimmung von Betriebszuständen (auch als Key Performance Indices bezeichnet) sind z.B.:

- Bewegungsparameter,
- Regelungseinstellung,
- Sensorwerte sowie
- Geberwerte.

Ein Bewegungsparameter ist beispielhaft eine Drehzahl eines jeweiligen Motors, ein Motorstrom oder ein Drehmoment des jeweiligen Motors.

Eine Regelungseinstellung ist die Einstellung eines Regelkreises, beispielhaft ein Proportionalanteil oder Differentialanteil eines PID-Reglers oder eine Regelgüte eines Regelkreises.

Ein Sensorwert ist beispielhaft ein Motorstrom, eine Temperatur eines Motors oder eine Schwingungsdauer bzw. eine Amplitude einer Schwingung. In Bezug auf eine industrielle Anlage, insbesondere auf eine Papiermaschine, kann ein Sensorwert eine Feuchte einer Papierbahn, eine Temperatur einer Walze, der Druck in einer Leitung, die Dicke einer Papierbahn oder eine Bahnspannung sein.

Ein Betriebszustand ist aus den jeweilige Regelungseinstellungen, den jeweiligen Bewegungsparametern und/oder den jeweiligen Sensorwerten ermittelbar. Die Ermittlung erfolgt vorzugsweise durch die Darstellung des Betriebszustandes als eine Funktion des jeweiligen Bewegungsparameters, der jeweiligen Regelungseinstellungen, des jeweiligen Sensorwertes und/oder des jeweiligen Geberwertes. Die Funktion kann auch mehrere Sensorwerte, mehrere Geberwerte, mehrere Regelungseinstellungen und/oder mehrere Bewegungsparameter umfassen.

Um einen zweckmäßigen Betriebszustand zu ermitteln, ist demnach eine (zweckmäßige) Funktion, insbesondere durch Auswahl, zu ermitteln. Die Funktion verknüpft die vorstehend genannten Größen (Regelungseinstellungen, Bewegungsparameter, Sensorwerte und Geberwerte) zu einem Betriebszustand. Ein zweckmäßiger Betriebszustand wird mit Hilfe eines Benchmark-Verfahrens ausgewählt.

Die Auswahl des zweckmäßigen Betriebszustandes erfolgt aus einer Vielzahl von Betriebszuständen. Die Zweckmäßigkeit der Auswahl ergibt sich daraus, wie gut der Betriebszustand einer Zielgröße entspricht.

Eine Zielgröße ist insbesondere

- die Produktivität der industriellen Anlage oder eines Teils einer industriellen Anlage,
- der Energieverbrauch zumindest eines Teils der Anlage,
- die Energieeffizienz bei einer vorgegebenen Produktivität der Anlage,
- die Langlebigkeit der industriellen Anlage, oder
- eine Qualität des Produktes der industriellen Anlage.

In dem Benchmark-Verfahren wird also ein Betriebszustand ausgewählt, der am besten einer der Zielgrößen entspricht.

Durch eine Anpassung einer Analyse und einer Optimierung an einer Konfiguration der industriellen Anlage erfolgt die automatische Bestimmung der Betriebszustände.

Anhand der Konfiguration der industriellen Anlage, insbesondere der Konstruktion oder einer Analyse des Zusammenspiels der einzelnen Antriebskomponenten erfolgt die Bestimmung der Funktion bzw. des Betriebszustandes.

Der Betriebszustand der Anlage (auch als Key Performance Index, KPI bezeichnet) wird durch die Funktion beschrieben. Im nachfolgenden Benchmark-Verfahren wird der Betriebszustand ausgewählt, welcher am besten eine der oben genannten Zielgrößen entspricht.

Das Benchmark-Verfahren umfasst daher folgende Schritte:

In einem ersten Schritt wird aus den Sensorwerten, Bewegungsparametern, Geberwerten und/oder Regelungseinstellungen durch jeweils eine Funktion ein Betriebszustand zusammengesetzt.

Die Größen können hierbei Funktionen durch Addition, Subtraktion, Multiplikation oder Division der Größen untereinander bilden. Auch andere mathematische Verknüpfungen kommen hierzu in Frage: Potenzfunktion, trigonometrische Funktionen oder dergleichen mehr sind ggf. geeignet, um aus den Größen Betriebszustände mit Hilfe einer Funktion zu bilden.

In einem zweiten Schritt werden die Funktionen mit jeweils einem Funktionsmaß verknüpft. Das Funktionsmaß gibt an, wie gut die Funktion einer der oben genannten Zielgrößen entspricht.

Die Zielgröße ist hierbei vorzugsweise vorgegeben. Bei der Bestimmung des Funktionsmaßes wird vorzugsweise die Übereinstimmung der Funktion mit der Zielgröße bestimmt. Bevorzugt erfolgt die geforderte Übereinstimmung über eine Zeitdauer, wie der Betriebszeit der industriellen Anlage, hinweg.

In einem dritten Schritt werden die Funktionen anhand ihres Funktionsmaßes angeordnet und die Funktionen ausgewählt, bei denen das Funktionsmaß die beste Übereinstimmung zwischen der Funktion bzw. des Betriebsparameters (KPI) und der Zielgröße zeigt.

Die ausgewählte Funktion mit der besten Übereinstimmung ist dann der jeweils zweckmäßige Betriebszustand. Der zweckmäßige Betriebszustand kann in einem weiteren Schritt dem Bedienpersonal der industriellen Anlage angezeigt werden.

Vorzugsweise kann das Bedienpersonal aus einer Mehrzahl von zweckmäßigen Betriebszuständen auswählen, wobei die Mehrzahl der zweckmäßigen Betriebszustände sich aus einer Mehrzahl der Funktionen ergibt, bei denen die Übereinstimmung zwischen der jeweiligen Funktion bzw. des jeweiligen Betriebsparameters und der jeweiligen Zielgröße besonders gut ist.

Weiter können dem Bedienpersonal auch mehrere Betriebszustände angezeigt werden, wobei der jeweilig angezeigte Betriebszustand jeweils einer anderen der oben genannten Zielgrößen entspricht.

Der Vorteil der hier vorgestellten Erfindung ist es, dass zweckmäßige Betriebszustände nicht mehr aufwendig händisch bestimmt werden müssen, sondern automatisiert ermittelt werden. Somit sind gerade bei großen und komplexen Anlagen die Bedienung und die Einrichtung dieser Anlage stark vereinfacht.

Bei dem Verfahren zur Bestimmung zumindest eines Betriebszustandes einer industriellen Anlage, insbesondere einer Papiermaschine oder einem Teil einer Papiermaschine, weist die industrielle Anlage einen Motor oder mehrere Motoren auf, wobei der jeweilige Motor jeweils Bewegungsparameter bereitstellt, wobei das Verfahren zumindest folgende Schritte umfasst:

- Bereitstellung einer Mehrzahl von Betriebszuständen aus jeweils einem Bewegungsparameter oder aus mehreren Bewegungsparametern,
- Auswahl des zweckmäßigen Betriebszustandes aus der Mehrzahl der Betriebszustände durch ein Benchmark-Verfahren.

Ein Bewegungsparameter ist eine Drehzahl eines Motors, ein Drehmoment eines Motors oder auch ein Übersetzungsverhältnis eines Getriebes. Ein Bewegungsparameter, insbesondere ein Drehmoment oder eine Drehzahl kann auch von einem Frequenzumrichter bereitgestellt werden, der dem jeweiligen Motor zugeordnet ist.

Ein Betriebszustand gibt den Zustand bzw. die Funktionsweise einer industriellen Anlage oder eines Teils der industriellen Anlage an. Ein Betriebszustand kann der Energieverbrauch oder eine Stabilität eines Betriebsmodus der industriellen Anlage sein.

Ein zweckmäßiger Betriebszustand gibt Auskunft über die Funktion der industriellen Anlage oder eines Teils der industriellen Anlage. Ein zweckmäßiger Betriebszustand kann beispielhaft an

- der Produktivität,
- der Fehlersicherheit,
- der Energieeffizienz, und/oder am
- Energieverbauch angelehnt sein.

Durch das Benchmark-Verfahren sind ein zweckmäßiger Betriebszustand und/oder mehrere zweckmäßige Betriebszustände automatisiert ermittelbar.

In einer vorteilhaften Ausgestaltung werden sämtliche Bewegungsparameter des jeweiligen Motors einer Schnittstelle bereitgestellt.

Bei einer vorteilhaften Ausgestaltung der Erfindung umfasst die industrielle Anlage weiter zumindest einen Sensor und/oder zumindest einen Regelkreis, wobei der zumindest eine Sensor Sensorwerte an eine Schnittstelle bereitstellt, und/oder der zumindest eine Regelkreis Regelungseinstellungen an die Schnittstelle bereitstellen, wobei die Betriebszustände jeweils Funktionen des jeweiligen Bewegungsparameters, des jeweiligen Sensorwertes und/oder der jeweiligen Regelungseinstellung sind.

Ein Regelkreis kann zur Regelung eines Bewegungsparameters, wie beispielhaft der Drehzahl eines Motors, dienen. Ein Regelkreis stellt eine Regelungseinstellung bereit. Eine Regelungseinstellung kann ein Differential-Anteil eines PID-Regelkreises oder ein Rückkoppelfaktor eines solchen Regelkreises sein. Der Regelkreis kann Teil einer Steuereinrichtung der industriellen Anlage oder eines Antriebsystems sein.

Ein Sensor kann ein Temperatursensor, ein Drucksensor oder ein sonstiger Sensor sein. Der Sensor stellt, vorzugsweise als Funktion der Zeit, Sensorwerte bereit. Ein Sensorwert kann die Temperatur einer Wicklung eines Motors sein. Ein Sensorwert kann auch der Motorstrom eines Motors sein. Darüber hinaus kann ein Sensorwert eine auf eine Warenbahn wirkende Kraft sein.

Der jeweilige Sensorwert, der jeweilige Bewegungsparameter sowie die jeweilige Regelungseinstellung werden einer Schnittstelle bereitgestellt. Die Schnittstelle ist vorzugsweise als eine technische Datenverbindung oder als ein BusSystem, insbesondere als Netzwerkverbindung wie PROFI-Net oder EtherCAT, ausgestaltet.

Die Schnittstelle ist vorzugsweise als gemeinsame Schnittstelle von einer Steuereinrichtung und/oder zumindest einem Umrichter ausgeführt. Die Schnittstelle kann auch als Software-Schnittstelle im Rahmen des Computerprogrammprodukts ausgeführt sein.

Die Schnittstelle kann auch innere Komponenten eines Antriebsystems sowie auch einzelne Module der jeweiligen Antriebskomponente verbinden.

Bei einer weiteren vorteilhaften Ausgestaltung der Erfindung umfasst das Benchmark-Verfahren folgende Schritte:

- Bestimmung der Betriebszustände durch eine Funktion aus dem zumindest einen Bewegungsparameter sowie optional aus dem zumindest einen Sensorwert und/oder der zumindest einen Regelungseinstellung,
- Zuweisung eines Funktionsmaßes zu dem jeweiligen Betriebszustand,
- Anordnen der Betriebszustände nach dem Funktionsmaß zu einer Anordnung,
- Auswahl des zumindest einen zweckmäßigen Betriebszustandes anhand der Anordnung.

Sei die Funktion im Folgenden als F bezeichnet. Der Funktion sei weiter ein Funktionsmaß (als m bezeichnet) zugeordnet, wobei das Funktionsmaß der Funktion eine (positive) Zahl zuordnet.

Ein Betriebszustand ist weiter eine solche Funktion von

- Bewegungsparametern (als BP bezeichnet),
- Regelungseinstellungen (als RE bezeichnet),
- Sensorwerte (als SW bezeichnet) und/oder von
- Geberwerten (als GW bezeichnet).

Somit gilt für einen Betriebszustand (als KPI bezeichnet)

```
KPI = F(BP, RE, SW, GS).
```

Die Funktion kann willkürlich zusammengestellt sein oder von einer vorgegebenen Form wie einer Summendarstellung oder in einer Potenzreihendarstellung der einzelnen Größen abgeleitet sein. Denkbar ist auch eine Kombination der Funktion mit trigonometrischen Funktionen.

Durch unterschiedliche Darstellungen der Funktion einer großen Anzahl von Größen kann eine Vielzahl von (möglichen) Betriebszuständen ermittelt werden.

Zweck des Benchmark-Verfahrens ist es nun, einen oder mehrere zweckmäßige(n) Betriebszustände aus der Vielzahl der (möglichen) Betriebszustände bzw.

Funktionen auszuwählen.

Hierzu wird die Zweckmäßigkeit des jeweiligen Betriebszustandes ermittelt. Dies erfolgt mit Hilfe des Funktionsmaßes, wobei das Funktionsmaß einen umso geringeren Wert aufweist, desto zweckmäßiger der Betriebszustand ist.

Beispielhaft wird hierzu jeder Funktion oder jedem Betriebszustand jeweils ein Funktionsmaß zugeordnet. Ein Funktionsmaß kann beispielhaft durch die

$$m(F) = \int\limits_0^t |Z(t') - F(t')| dt'$$

Hierbei bezeichnet Z eine Zielgröße. Je besser die Funktion mit der vorgegebenen Zielgröße Z übereinstimmt, desto kleiner ist das Funktionsmaß. Hierbei ist t die Zeit und t' ist die Integrationsvariable.

Somit sind die einzelnen Funktionen F und somit die einzelnen Betriebszustände durch die Abbildung auf den Raum der positiven realen Zahlen zu einer Anordnung (im Folgenden auch als An bezeichnet) anordenbar.

Die Funktion oder die Funktionen mit dem (jeweils) kleinsten Funktionsmaß entsprechen dann dem zweckmäßigen Betriebszustand.

Durch diese Ausführung ist es möglich, selbst willkürlich ermittelte Betriebszustände in einer Anordnung anzuordnen.

Bei einer weiteren vorteilhaften Ausgestaltung der Erfindung erfolgt die Zuweisung des Funktionsmaßes anhand einer Übereinstimmung des jeweiligen Betriebszustandes und einer Zielgröße.

Bevorzugt kann auch eine Kombination von Zielgrößen angegeben werden. Eine Kombination einer Zielgröße ist beispielsweise eine Produktivität bei einem vorgegebenen Energieverbrauch.

Durch eine geschickte Auswahl der Zielgröße kann die Funktionsweise der industriellen Anlage individuell angepasst werden. Dies gilt insbesondere dann, wenn aufgrund der hohen Komplexität der industriellen Anlage eine solche Größe nur umständlich zu bestimmen wäre.

Bei einer weiteren vorteilhaften Ausgestaltung der Erfindung werden die jeweilige Regelungseinstellung, der jeweilige Bewegungsparameter und/oder der jeweilige Sensorwert durch die Schnittstelle an eine Steuereinrichtung bereitgestellt.

Durch die Bereitstellung der Regelungseinstellung, des jeweiligen Bewegungsparameters, des jeweiligen Geberwertes und/oder des jeweiligen Sensorwertes können alle Größen der industriellen Anlage zusammen bereitgestellt werden. Hierfür sind lediglich der jeweiligen Motor, der jeweilige Sensor, der jeweilige Geber und/oder der jeweilige Regelkreis mit der Schnittstelle verbindbar auszugestalten.

Bei einer weiteren vorteilhaften Ausgestaltung der Erfindung wird der jeweilige Bewegungsparameter des jeweiligen Motors durch ein Gebersignal eines Gebers der Schnittstelle bereitgestellt.

Dabei ist der jeweilige Geber einem Motor zugeordnet. Ein Geber kann auch einem Drehmomentwandler, einer Warenbahn oder einer Walze zugeordnet sein.

Durch die Bereitstellung der Drehzahl des jeweiligen Motors durch einen Geber ist eine besonders hohe Genauigkeit möglich.

Bei einer weiteren vorteilhaften Ausgestaltung der Erfindung stellt die Schnittstelle den jeweiligen Bewegungsparameter des jeweiligen Motors und/oder das Signal des jeweiligen Gebers an eine Steuereinrichtung bereit.

Vorzugsweise dient die Schnittstelle zur Verbindung der einzelnen Antriebskomponenten wie Steuereinrichtung, Umrichter, des zumindest einen Sensors, des zumindest einen Gebers, des zumindest einen Motors und/oder einer übergeordneten Recheneinheit.

Die Steuereinrichtung dient zur Steuerung von Motoren der industriellen Anlage oder des Antriebssystems. Die Steuereinrichtung weist insbesondere den zumindest einen Regelkreis auf.

Die übergeordnete Recheneinheit kann in der Steuereinrichtung des Antriebssystems integriert werden oder als zentraler oder dezentraler Server, insbesondere als Cloud, ausgebildet sein. Die übergeordnete Recheneinheit dient vorzugsweise zur Durchführung des Benchmark-Verfahrens.

Die Vorrichtung zur Bereitstellung eines zweckmäßigen Betriebszustandes einer industriellen Anlage weist zumindest einen Motor, zumindest einen Sensor, optional einen, dem jeweiligen Motor zugeordneten, Geber, eine Schnittstelle und eine Steuereinrichtung auf, wobei die Schnittstelle die Steuereinrichtung mit dem Sensor, dem optionalen Geber verbindet, wobei die Steuereinrichtung zur Steuerung der industriellen Anlage vorgesehen ist, wobei die Steuereinrichtung mit Hilfe einer Recheneinheit zur Bereitstellung des zweckmäßigen Betriebszustand gemäß dem hier beschrieben Verfahren vorgesehen ist.

Die Vorrichtung ist vorzugsweise Teil eines Antriebssystems und das Antriebssystem ist vorzugsweise Teil einer industriellen Anlage.

Durch die Vorrichtung kann eine industrielle Anlage so erweitert werden, dass nach einer Installation der Antriebskomponenten ein zweckmäßiger Betriebszustand oder mehrere zweckmäßige Betriebszustände ermittelt und angezeigt werden können.

Die Bestimmung des zweckmäßigen Betriebszustandes erfolgt vorzugsweise auf einer Recheneinheit, die der industriellen Anlage oder der Steuereinrichtung zugeordnet ist. Die Recheneinheit kann auch durch eine externe Recheneinheit, insbesondere eine Cloud, erweitert sein.

Bei einer weiteren vorteilhaften Ausgestaltung der Erfindung wird der zweckmäßige Betriebszustand auf einer Anzeige, insbesondere auf einer mobilen Anzeige, angezeigt.

Durch die Anzeige des zumindest einen zweckmäßigen Betriebszustandes auf der Anzeige, insbesondere auf der mobilen Anzeige, ist der Betriebszustand der industriellen Anlage unmittelbar für das Bedienpersonal sichtbar.

Die Anzeige kann auf einem Bildschirm, welcher der industriellen Anlage zugeordnet ist, erfolgen.

Vorzugsweise erfolgt die Darstellung auf einem mobilen Display, beispielhaft auf einem Tablet-Computer, einem Smartphone oder auf einer übergeordneten Steuereinheit.

Insbesondere durch die mobile Anzeige kann der Zustand der industriellen Anlage oder des jeweiligen Teils der industriellen Anlage von nahezu jedem Ort kontrolliert werden.

Bei einer weiteren vorteilhaften Ausgestaltung der Erfindung umfasst diese weiter zumindest einen Frequenzumrichter, wobei der jeweilige Frequenzumrichter mit dem zumindest einen Motor verbunden ist, wobei der jeweilige Frequenzumrichter mit der Schnittstelle verbunden ist.

Die Schnittstelle dient insbesondere als technische Datenverbindung zum Austausch von Daten und/oder Signalen zwischen den einzelnen Komponenten des Antriebssystems. Durch eine Verbindung des Frequenzumrichters und der Steuereinrichtung können Sensoren, die im Umrichter lokalisiert sind, Sensorwerte an die Steuereinrichtung bereitstellen. Sensorwerte sind beispielhaft: ein Motorstrom, eine Frequenz oder eine Phasenverschiebung zwischen Motorstrom und Motorspannung. Die Erfassung dieses Sensorwertes erfolgt vorzugsweise im Frequenzumrichter.

Durch die Verbindung des jeweiligen Frequenzumrichters mit der Steuereinrichtung können Sensorwerte, die von Sensoren bereitgestellt werden, welche dem Umrichter zugeordnet sind, einfach über die Schnittstelle an die Steuereinrichtung übertragen werden.

Bei einer weiteren vorteilhaften Ausgestaltung der Erfindung stellt der Frequenzumrichter den jeweiligen Bewegungsparameter des dem Frequenzumrichters zugeordneten Motor an die Schnittstelle bereit.

Mit anderen Worten stellt in dieser Ausführung der Erfindung nicht der Motor sondern der Frequenzumrichter den jeweiligen Bewegungsparameter bereit.

Durch eine Bereitstellung der Bewegungsparameter des jeweiligen Motors durch den Frequenzumrichter kann ggf. ein Geber eingespart werden. Weiter können die Geberwerte, die durch den Geber an die Schnittstelle bereitgestellt werden, durch Daten, welche von dem jeweiligen Frequenzumrichter bereitgestellt werden, kontrolliert oder ergänzt werden.

Bei einer weiteren vorteilhaften Ausgestaltung der Erfindung ist die Schnittstelle zur Verbindung des jeweiligen Sensors, des jeweiligen Frequenzumrichters, des jeweiligen Gebers mit der Steuereinrichtung ausgebildet.

Die Schnittstelle ist vorzugsweise eine gemeinsame Schnittstelle. Die Schnittstelle dient sowohl zur Verbindung der Antriebskomponenten. Weiter dient die Schnittstelle für die Bereitstellung der Bewegungsparameter, der Sensorwerte oder der Regelungseinstellungen.

Antriebskomponenten sind insbesondere die Steuereinrichtung, der jeweilige Frequenzumrichter, der jeweilige Motor, der jeweilige Sensor, der jeweilige Geber.

Die Schnittstelle dient zur Sammlung und/oder Zusammenführung der Größen: Geberwerte, Bewegungsparameter, Regelungseinstellungen, Sensorwerte. Die Größen können durch die Schnittstelle der mit der Schnittstelle verbundenen Antriebskomponente bereitgestellt werden.

Bei einer weiteren vorteilhaften Ausgestaltung der Erfindung ist die Schnittstelle sowohl zur Verbindung des jeweiligen Sensors, des jeweiligen Frequenzumrichters und des jeweiligen Gebers an die Steuereinrichtung und/oder dem Frequenzumrichter ausgebildet. Die Schnittstelle ist also eine gemeinsame Schnittstelle. Vorzugsweise ist die Schnittstelle als Netzwerk (-Verbindung) ausgebildet.

Bei einer weiteren vorteilhaften Ausgestaltung der Erfindung weisen die Steuereinrichtung und/oder der Frequenzumrichter jeweils Module auf, wobei die Schnittstelle zur Verbindung der Module vorgesehen ist.

Antriebskomponenten sind heute oft modular aufgebaut. Beispielhaft weist ein moderner Frequenzumrichter sowohl ein Leistungsteil zur Erzeugung des Motorstroms als auch eine zugeordnete Steuereinheit auf.

Vorzugsweise sind daher sowohl die einzelnen Module der Antriebskomponenten untereinander als auch die Antriebskomponenten miteinander mit der Schnittstelle verbindbar.

Durch diese Ausführung kann beispielhaft die Steuereinrichtung direkt über die Schnittstelle auf einen Sensor zugreifen, welcher einem Frequenzumrichter zugeordnet ist.

Das Computerprogrammprodukt ist zum Ablauf auf einer Recheneinheit oder einer Steuereinrichtung vorgesehen, wobei das Computerprogrammprodukt zur Ausführung eines hier beschriebenen Verfahrens vorgesehen ist. Das Computerprogrammprodukt ist vorzugsweise auf einem Datenspeicher gespeichert und wird von dort aus auf einer Recheneinheit geladen und ausgeführt. Bei der Ausführung des Computerprogrammproduktes kann das Computerprogrammprodukt zumindest teilweise in einen Arbeitsspeicher geladen werden.

Vorzugsweise ist das Computerprogrammprodukt auf einem zentralen Server, auf einer dezentralen Recheneinheit oder auf einer Cloud installiert. Vorzugsweise wird es auf einer der vorgenannten Recheneinheiten bzw. der Cloud auch ausgeführt.

Die Schnittstelle stellt die Größen für das Computerprogrammprodukt bereit.

Im Folgenden wird die Erfindung anhand von Figuren näher beschrieben und erläutert. Die hier gezeigten Ausführungsbeispiele können zu neuen Ausführungsbeispielen kombiniert werden und sind nicht derart zu verstehen, dass sie die Erfindung einschränken. Es zeigen:

FIG 1    eine industrielle Anlage,
FIG 2    ein Antriebssystem sowie
FIG 3    ein Verfahren.

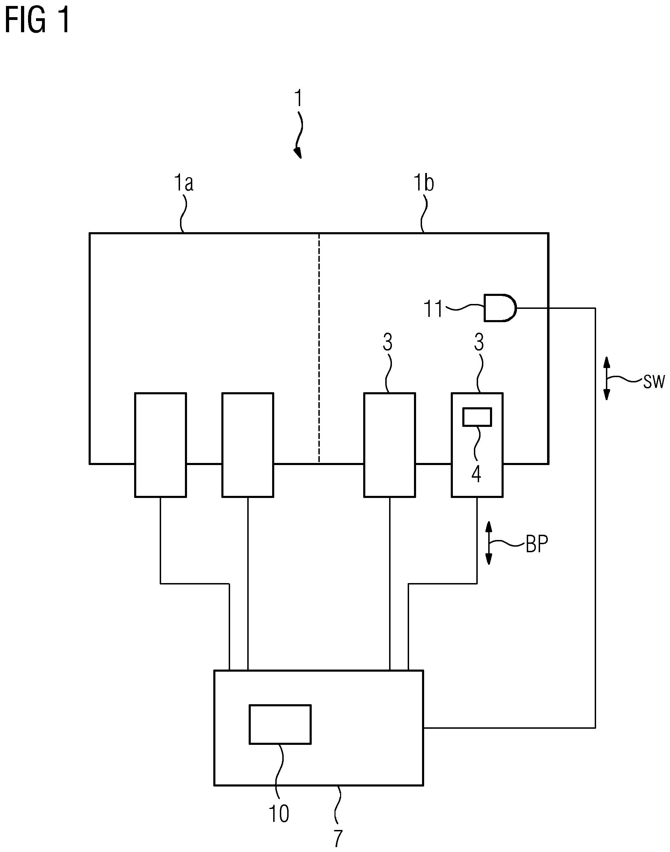

FIG 1 zeigt eine industrielle Anlage 1. Die industrielle Anlage 1 weist einen ersten Anlagenteil 1a und einen zweiten Anlagenteil 1b auf. Die industrielle Anlage 1 weist weiter mehrere Motoren 3 auf, wobei zumindest ein Teil der Motoren 3 einen Geber 4 aufweist. Der Geber 4 oder der Motor 3 stellt Bewegungsparameter BP einer Steuereinrichtung 7 zur Verfügung. Die Steuereinrichtung 7 weist eine Regeleinrichtung 10 auf. Die Regeleinrichtung 10 dient insbesondere zur Regelung von den Bewegungsparameter BP, wie einer Drehzahl oder einem Drehmoment des jeweiligen Motors 3. Die industrielle Anlage 1 weist zudem mehrere Sensoren 11 auf, wobei die Sensoren 11 Sensorwerte SW der Steuereinrichtung 7 bereitstellen. Die Steuereinrichtung 7 dient zur Bereitstellung und/oder zur Anzeige von Betriebszuständen KPI, insbesondere des zweckmäßigen Betriebszustandes KPI* der industriellen Anlage. Die Anzeige erfolgt bevorzugt auf einer Anzeige, die der Steuereinrichtung 7 zugeordnet ist.

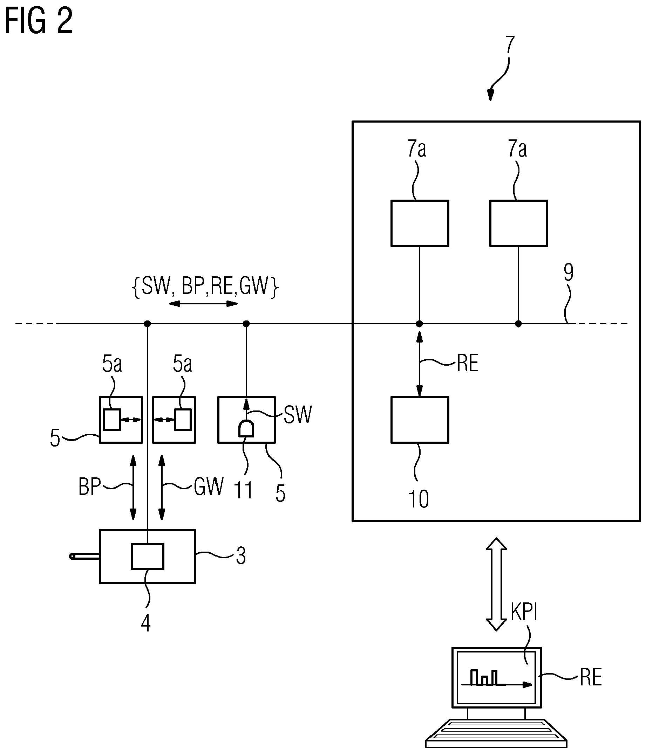

FIG 2 zeigt ein Antriebssystem. Das Antriebssystem weist eine Steuereinrichtung 7, zwei Frequenzumrichter 5 sowie einen Motor 3 auf. Die Komponenten des Antriebssystems (Steuereinrichtung 7, Frequenzumrichter 5 und Motor 3) sind über eine Schnittstelle 9 verbunden. Die Schnittstelle 9 dient zur Verbindung der einzelnen Komponenten sowie zur Bereitstellung der Größen:

- Bewegungsparameter BP,
- Regelungseinstellungen RE,
- Geberwerte GW sowie
- Sensorwerte SW.

Die Sensorwerte SW werden von einem Sensor 11 bereitgestellt, wobei der Sensor 11 hier einem Frequenzumrichter 5 zugeordnet ist. Die Steuereinrichtung 7 weist Module 7a auf, wobei die Module 7a Teile der Steuereinrichtung 7 sind. Weiter weist der Frequenzumrichter 5 Module 5a auf, wobei auch die Module 5a zur Durchführung spezifischer Aufgaben des Frequenzumrichters 5 dienen. Die Steuereinrichtung 7 bzw. das Antriebssystem ist weiter mit einer Recheneinheit RE verbunden, wobei diese zur Berechnung und/oder Darstellung der Betriebszustände KPI, insbesondere des zweckmäßigen Betriebszustandes KPI* vorgesehen ist. Die Schnittstelle 9 dient sowohl zur Verbindung der einzelnen Komponenten 3, 6, 7 des Antriebssystems als auch zur Verbindung der einzelnen Module 5a, 7a in dem jeweiligen Frequenzumrichter 5 und/oder der Steuereinrichtung 7. Es handelt sich somit um eine gemeinsame Schnittstelle 9.

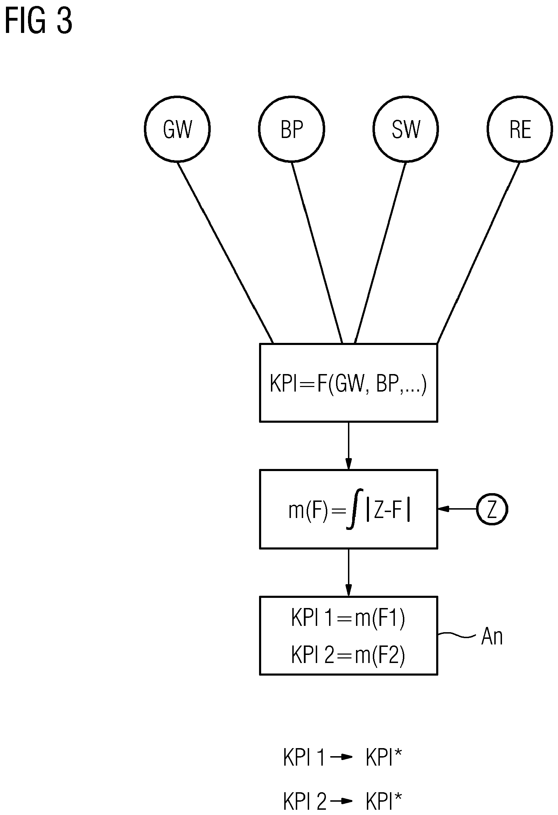

FIG 3 zeigt ein Verfahren zur Bereitstellung zweckmäßiger Betriebszustände KPI*. In einem ersten Verfahrensschritt wird eine Vielzahl von Betriebszuständen als Funktion eines Sensorwertes SW, einer Regelungseinstellung RE, eines Bewegungsparameters BP und/oder eines Geberwertes GW erstellt. Ein Betriebszustand KPI ist demnach eine Funktion F der vorgenannten Größen. In einem zweiten Schritt wird der Funktion F ein Funktionsmaß m zugeordnet, wobei das Funktionsmaß m eine Übereinstimmung der Funktion F (bzw. des Betriebszustandes KPI) mit einer Zielgröße Z ist. Die Funktion F und/oder die Zielgröße Z kann auch von der Zeit abhängen. In einem dritten Verfahrensschritt wird anhand des Funktionsmaßes die Funktionen F1, F2 in einer Anordnung An angeordnet. Diejenigen Betriebszustände KPI1, KPI2, welche das geringste Funktionsmaß m aufweisen, werden als zweckmäßige Betriebszustände KPI* ausgewählt. Die zweckmäßigen Betriebszustände KPI* können auf einer Anzeige angezeigt werden.

Zusammenfassend betrifft die Erfindung ein Verfahren und eine Vorrichtung zur Bereitstellung eines zweckmäßigen Betriebszustandes KPI*, ein Antriebssystem und ein Computerprogrammprodukt sowie eine industrielle Anlage 1. Ausgehend von Bewegungsparametern BP wie Drehzahl oder Drehmoment, Sensorwerten SW wie einer Temperatur oder einer Regelungseinstellung RE wird eine Vielzahl von (möglichen) Betriebszuständen KPI, KPI1, KPI2 durch Funktionen F des jeweiligen Bewegungsparameters BP, des jeweiligen Sensorwertes SW und/oder der jeweiligen Regelungseinstellung RE zusammengestellt. Mittels eines Benchmark-Verfahrens wird aus den Betriebszuständen KPI zumindest ein zweckmäßiger Betriebszustand KPI* ausgewählt. Der zweckmäßige Betriebszustand KPI* kann dem Bedienpersonal der industriellen Anlage 1 angezeigt werden. Durch die Erfindung wird Auswahl des zweckmäßigen Betriebszustandes KPI* automatisiert. So kann das Bedienpersonal der industriellen Anlage 1 entlastet werden.

**Patentansprüche**

1. Verfahren zur Bestimmung zumindest eines zweckmäßigen Betriebszustandes (KPI*) einer industriellen Anlage (1), insbesondere einer Papiermaschine oder einem Teil einer Papiermaschine, wobei die industrielle Anlage (1) einen Motor (3) oder mehrere Motoren (3) aufweist, wobei der jeweilige Motor (3) jeweils Bewegungsparameter (BP) bereitstellt, wobei das Verfahren zumindest folgende Schritte umfasst:

   - Bereitstellung einer Mehrzahl von Betriebszuständen (KPI) aus dem jeweiligen Bewegungsparameter (BP) oder mehreren Bewegungsparametern (BP),
   - Auswahl des zweckmäßigen Betriebszustandes (KPI) aus der Mehrzahl der Betriebszustände (KPI) durch ein Benchmark-Verfahren.

2. Verfahren nach Anspruch 1, wobei die industrielle Anlage (1) weiter zumindest einen Sensor (11) und/oder zumindest einen Regelkreis (10) umfasst, wobei der zumindest eine Sensor (11) Sensorwerte (SW) an eine Schnittstelle (9) bereitstellt, der jeweilige Motor (3) die Bewegungsparameter (BP) und/oder der zumindest eine Regelkreis (11) Regelungseinstellungen (RE) an die Schnittstelle (9) bereitstellen, wobei die Betriebszustände (KPI) jeweils Funktionen (F) des jeweiligen Bewegungsparameters (BP), des jeweiligen Sensorwertes (SW) und/oder der jeweiligen Regelungseinstellung (RE) sind.

3. Verfahren nach einem der vorangehenden Ansprüche, wobei das Benchmark-Verfahren folgende Schritte umfasst:

   - Bestimmung der Betriebszustände (KPI) durch eine Funktion (F) aus dem zumindest einen Bewegungsparameter (BP) sowie optional aus dem zumindest einen Sensorwert (SW) und/oder der zumindest einen Regelungseinstellung (RE),
   - Zuweisung eines Funktionsmaßes (m) zu dem jeweiligen Betriebszustand (KPI),
   - Anordnen der Betriebszustände (KPI) nach dem Funktionsmaß (m) zu einer Anordnung (An),
   - Auswahl des zumindest einen zweckmäßigen Betriebszustandes (KPI*) anhand der Anordnung (An).

4. Verfahren nach Anspruch 3, wobei die Zuweisung des Funktionsmaßes (m) anhand der Übereinstimmung des jeweiligen Betriebszustandes (KPI) und einer Zielgröße (Z) erfolgt.

5. Verfahren nach einem der vorangehenden Ansprüche, wobei die jeweilige Regelungseinstellung (RE), der jeweilige Bewegungsparameter (BP) und/oder der jeweilige Sensorwert (SW) durch die Schnittstelle (9) an eine Steuereinrichtung (7) bereitgerstellt werden.

6. Verfahren nach einem der vorangehenden Ansprüche, wobei der jeweilige Bewegungsparameter (BP) des jeweiligen Motors (3) auch durch ein Gebersignal (GS) eines Gebers (4) der Schnittstelle bereitgestellt wird.

**7.** Verfahren nach einem der vorangehenden Ansprüche, wobei die Schnittstelle den jeweiligen Bewegungsparameter (BP) des jeweiligen Motors (3), das Signal des jeweiligen Gebers (4) an eine Steuereinrichtung (9) bereitstellt.

**8.** Vorrichtung zur Bereitstellung eines zweckmäßigen Betriebszustandes (KPI*) einer industriellen Anlage (1), aufweisend zumindest einen Motor (3), zumindest einen Sensor (11), optional einem, dem jeweiligen Motor (3) zugeordneten, Geber (4), eine Schnittstelle (9) und eine Steuereinrichtung (7), wobei die Schnittstelle (9) die Steuereinrichtung (7) mit dem Sensor (11), dem optionalen Geber (4) verbindet, wobei die Steuereinrichtung (7) zur Steuerung der industriellen Anlage (1) vorgesehen ist, wobei die Steuereinrichtung (7) mit Hilfe einer Recheneinheit zur Bereitstellung des zweckmäßigen Betriebszustand (KPI*) gemäß einem Verfahren nach einem der vorangehenden Ansprüche vorgesehen ist.

**9.** Vorrichtung nach Anspruch 8, wobei der zweckmäßige Betriebszustand (KPI) auf einer Anzeige, insbesondere auf einer mobilen Anzeige, angezeigt wird.

**10.** Vorrichtung nach Anspruch 8 oder 9, weiter aufweisend zumindest einen Frequenzumrichter (5), wobei der jeweilige Frequenzumrichter (5) mit dem zumindest einen Motor (3) verbunden ist, wobei der jeweilige Frequenzumrichter (5) mit der Schnittstelle (9) verbunden ist.

**11.** Vorrichtung nach Anspruch 10, wobei der Frequenzumrichter (5) den jeweiligen Bewegungsparameter (BP) des dem Frequenzumrichters zugeordneten Motor (3) an die Schnittstelle (9) bereitstellt.

**12.** Vorrichtung nach einem der Ansprüche 8 bis 11, wobei die Schnittstelle (11) zur Verbindung des jeweiligen Sensors (11), des jeweiligen Frequenzumrichters (5), des jeweiligen Gebers (11) mit der Steuereinrichtung (7) ausgebildet ist.

**13.** Vorrichtung nach einem der Ansprüche 8 bis 12, wobei die Steuereinrichtung (7) und/oder der Frequenzumrichter (5) jeweils Module (5a, 7a) aufweisen, wobei die Schnittstelle (9) zur Verbindung der Module (5a, 7a) vorgesehen ist.

**14.** Antriebssystem, umfassend eine Vorrichtung gemäß einem der Ansprüche 8 bis 13.

**15.** Computerprogrammprodukt zum Ablauf auf einer Recheneinheit oder einer Steuereinrichtung (7) eines Antriebssystems, wobei das Computerprogrammprodukt zur Ausführung eines Verfahrens gemäß einem der Ansprüche 1 bis 8 vorgesehen ist.

**16.** Industrielle Anlage, insbesondere Papiermaschine, aufweisend eine Vorrichtung nach einem der Ansprüche 8 bis 13.

FIG 1

FIG 2

# FIG 3

GW    BP    SW    RE

$$KPI = F(GW, BP, ...)$$

$$m(F) = \int |Z\text{-}F|$$

Z

$$KPI\ 1 = m(F1)$$
$$KPI\ 2 = m(F2)$$

An

$$KPI\ 1 \rightarrow KPI^*$$

$$KPI\ 2 \rightarrow KPI^*$$

# EP 3 404 591 A1

**Europäisches Patentamt**
**European Patent Office**
**Office européen des brevets**

## EUROPÄISCHER RECHERCHENBERICHT

Nummer der Anmeldung

EP 17 17 1002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/060145 A1 (MORRIS RYAN [US] ET AL) 2. März 2017 (2017-03-02) * Zusammenfassung; Abbildungen 1A,1B * * Absätze [0002], [0003], [0008] - [0011], [0021] - [0038] * ----- | 1-16 | INV. G06Q10/06 G06Q50/04 |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 19. Juli 2017 | Berlea, Alexandru |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**

EP 17 17 1002

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2017

| Im Recherchenbericht angeführtes Patentdokument | Datum der Veröffentlichung | Mitglied(er) der Patentfamilie | Datum der Veröffentlichung |
|---|---|---|---|
| US 2017060145 A1 | 02-03-2017 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 278817 A1